# EUROPEAN PATENT APPLICATION

(11) **EP 1 378 162 A1**
(43) Date of publication of application: **07.01.2004**
(21) Application number: 03014470.3
(22) Date of filing: 01.07.2003
(51) Int. Cl.: A01G 25/02, A01G 25/06

(54) **Improved irrigation pipelines**

(30) Priority: 02.07.2002 IL 15054702; 25.07.2002 IL 15090902
(71) Applicant: Margaliyot Trade and Fumigation Ltd., Netanya 42504 (IL)
(72) Inventor: Yonat, Gideon, Binyamina 30500 (IL); Friedman, Tomer, Herzlia 46682 (IL)
(74) Representative: Modiano, Guido, Dr.-Ing.

(57) **Abstract**

Improved drip pipelines that comprise a pipe with bores created therein for dispensing water to the soil, and a layer pervious to water applied to the pipe, such as fabric sleeve, a metal spiral sleeve to screen the bores. The pervious layer screens the surface of the segments of the pipeline wherein a bore or bores have been drilled.

## Description

### Field of the Invention

This invention relates to improved pipelines for drip irrigation, which are protected from the clogging of the bores present therein and from the ingress through said bores of undesired material, particularly growing roots.

### Background of the Invention

The use of pipelines which provide irrigation by gradually dispensing water or aqueous solutions to the soil, particularly in the form of drops or at any rate in periodic small quantities, is greatly widespread both in agriculture and in gardens, orchards and the like. Said pipelines merely consist of pipes, having bores formed in their wall thickness along their lengths, by drilling or by other means, such as boring, welding etc., connected to a source of a liquid - water or a solution, generally an aqueous solution - which dispense the liquid through said bores. In many cases, such drip pipelines are laid upon the soil, to feed water or solutions of any desired substances, such as fertilizers, weed killers, pest killers and so forth, to the uppermost layers of the soil. In other cases deeper penetration of the water or solutions is desired, and for this purpose the drip pipelines are laid within the soil at a certain depth from its surface.

In any case, a considerable trouble is caused by the ingress of undesired material into the bores of the drip pipes. The undesired material may be vegetable or mineral. Particularly, roots of vegetation may gradually grow through the bores of the pipes and clog them, at least to some extent, and may continue to grow within the pipes and reduce the cross-section available for the flow of liquid. Minerals may also be sucked into the pipes because of a temporary reduction of inside pressure. These phenomena reduce the efficiency of the pipeline as a supplier of desired liquid to the soil and often require the replacement of sections therefor. As far as the applicants know, the only means for attempting to prevent the growth of roots of vegetation into the pipes are chemical means. It must be kept in mind that drip pipelines are means for providing to the soil desired liquids, which must be very economical, particularly in view of their great extension, and that complicated and/or expensive improvements would be unacceptable.

It is therefore a purpose of this invention to provide drip pipelines that are protected against the ingress of any undesired material into the bores through which the drip action is carried out.

It is another purpose of this invention to provide means whereby existing drip pipelines may be so protected.

It is a further purpose of this invention to provide means, that are not chemical means, for preventing roots and other vegetable growths from penetrating into the bores of drip pipelines.

It is a still further purpose of this invention to provide drip pipelines the inside of which remains free from foreign materials and allows normal, unimpeded flow of liquids to be dispensed in the soil.

It is a still further purpose of this invention to provide the aforesaid results and advantages regardless of whether the drip pipeline is laid on the soil or within the soil at some depth from the surface.

It is a still further purpose of this invention to achieve the aforesaid purposes with inexpensive means, which do not require complex or difficult operations for their application.

Other purposes and advantages of the invention will appear as the description proceeds.

### Summary of the Invention

The improved drip pipelines of this invention are characterized by the fact that they comprise a protection, from the ingress of roots or other undesirable material, of the bores through which liquid is dispensed to the soil. The protection is preferably in the form of a layer pervious to water, and impervious to roots, that screens at least said bores. By the expression "screens said bores" is meant herein that the layer is interposed between the bores and the environment, particularly between the bores and the soil or the vegetation. Improved drip pipelines, according to the invention, comprise a pipe having bores created therein for dispensing water to the soil and a layer pervious to water applied to said pipe to screen the said bores. Preferably, said layer pervious to water is. applied to the entire periphery of the pipe, but its inner diameter is larger than the outer diameter of the pipe, so that a gap is left between the outer surface of the pipe and the water pervious layer and a larger surface is created for the permeation of water issuing from the bores of the pipe to the outside.

In a first form of the invention, said layer is a fabric. Preferably, the fabric circumscribes, not tightly but loosely, the entire surface of pipeline segments, at least the surface of the segments wherein a bore or bores have been made.

The preferred fabric is made of texturized polyester fibers. Preferably, the fabric has a high permeability to water. For example, a suitable polyester fabric is made by Avgol Textiles and a suitable polypropylene fabric is made by Polyon Barkai, both Israeli manufacturers.

The fabric can be in the form of tubular pieces slipped over each pipe section. However, it is preferred to make the fabric in rectangular pieces of the appropriate breadth, so that two (or more) rectangular pieces may be placed in parallel positions over and under, or at one and the other side, of the pipe, and their longitudinal edges may be juxtaposed and joined in any suitable way, to form a sleeve, viz. a composite, tubular structure. For example, a strip of fabric 10 cm wide and as long as a pipe section can be wrapped about a pipe having a diameter of 25 mm and its edges be joined by sewing to form a sleeve. By length, or longitudinal dimension, of a piece is meant its dimension parallel to the axis of the pipe, and by breadth, or transverse dimension, is meant its dimension perpendicular to the longitudinal one. In this way the invention can be applied to drip pipelines in situ, when they are installed on the ground, or to drip pipelines that have been already installed. Of course, the length of the fabric sections, whether the fabric is tubular or is in rectangular portions which are formed into a tubular structure rendered tubular by joining their longitudinal edges, can be as desired, can be as long as or longer than a section of pipeline or can be only as long as a part of it, whereby sections of the pipeline can be protected by shorter pieces of fabric juxtaposed at their transverse edges or spaced from one another in correspondence to parts of the pipeline which have no bores.

In a second form of the invention, the pervious layer is constituted by a metal sleeve placed around the pipelines, at least over the sections thereof comprising bores. Preferably said sleeve is constituted by a metal wire wound in the form of a helix or spiral and in the following description and claims the word "sleeve" should be so interpreted. It will be understood, and is implicit in this description though not further recalled, that such a spiral sleeve is flexible and could behave like a spring, which facilitates its use and permits it to adapt to bends or even convolutions of the pipeline to which it is applied. Actually, a spring could be used as spiral sleeve in this invention and a spiral sleeve could also be called "spring". A water pervious metal sleeve could be formed otherwise, for instance, it might be constituted by a cylindrical metal plate provided with perforations, but such forms, while included in the invention, are less preferred. A metal spiral sleeve, according to the invention, is pervious to water, because water can pass between adjacent turns of the spiral, but the space between adjacent turns is too small to allow vegetable matter, such as roots, or other undesired matter to pass. The bores are thus protected from clogging. On the other hand, the spacing between adjacent turns of the spiral is such that the spiral sleeve will not undesirably interfere with the delivery of water required for the drip irrigation, and is preferably such that all or nearly all of the water discharged from the bores of the pipeline will also be discharged through said sleeve, viz. that the rate of flow through the sleeve will equal, over a sufficient length of time, the rate of flow through the bores of an unprotected pipeline. The expression "over a sufficient length of time" means that, while a certain amount of water may accumulate between the pipe and the sleeve and some pressure may be created therein, after a certain time the rate of water flow through the sleeve will equal or nearly equal that through the bores.

A preferred metal pervious layer is a spiral sleeve made of a metal that is resistant to the environment in which it will be placed, over the ground or within the ground, as the case may be. In many cases, stainless steel is a satisfactory metal material. The diameter of the sleeve will depend, of course, on the diameter of the pipeline over which it is to be placed. The internal diameter of the sleeve may be equal or nearly equal to the external diameter of the pipeline, but is preferably larger to any desired extent. The diameter of the metal wire of which the spiral sleeve is made will be such that the wire may be easily wound to the desired spiral diameter, and may generally vary from 1 to 1.5 mm, e.g. 1.2 mm. The distance between adjacent spiral turns may generally be of 1 mm. However the said dimensional parameters will be determined so as to impart to the spiral sleeve the desired permeability to water.

In all embodiments of the invention, and particularly when the sleeve is made of fabric or consists in a metal spiral or spring, the permeability is determined by measuring a first amount of water, which is the amount dripped from a drip irrigation pipe, then applying a sleeve to the pipe and measuring a second amount of water, which is the water filtered through the sleeve. The ratio of the second amount of water to the first can be taken as expressing the permeability of the sleeve, and, according to the invention, should preferably be at least 0.80 (80 wt%). In many cases the two amounts of water are equal, viz. the sleeve behaves as if its permeability is 100 wt%. It will be appreciated that the same sleeve may have different permeabilities when applied to different drip pipelines, though generally it will have the same or nearly the same permeability with respect to any practical drip pipeline. Such an example will be given later on. Everything that is said in this specification and claims is to be understood as equally applying to aqueous solutions-.

Another aspect of the invention is a method for making an improved pipeline for drip irrigation purposes or for the purpose of providing desired fertilizer or weed or pest killer material to the soil, which comprises providing pipe sections, made by conventional techniques and having holes created in their wall thickness at any desired points, and creating water permeable sleeves where required by the presence of said holes.

When the water permeable sleeve is made of fabric, it is created a) as a first alternative, *by* juxtaposing to each pipe section a rectangular piece of fabric, folding said piece of fabric over said pipe so as to juxtapose its longitudinal edges, and connecting said edges in any convenient way, e.g., by stitching or welding if the fabric is thermoplastic; or b) as a second alternative, *by* juxtaposing to each pipe section two parallel rectangular pieces of fabric, bending said pieces of fabric over said pipe so as to juxtapose their longitudinal edges, and connecting said edges in any convenient way, e.g., by stitching or welding if the fabric is thermoplastic, or in any other suitable manner. In said second alternative, of course, more than two rectangular pieces of fabric could be used, but this would be a less convenient embodiment of the invention. As a variation, in said first alternative, a strip of any convenient material can be placed over said longitudinal edges, which in this case need not necessarily be juxtaposed but may only be sufficiently close to one another, and then said strip may be longitudinally connected to the fabric to connect or retain its longitudinal edges in close positioned relationship and to cover the gap between them; and a similar variation could be made to said second alternative. Generally, the fabric or fabric pieces entirely surround the pipe, while preferably leaving a gap between them and the pipe, and therefore form what can be called and has been called a "sleeve". It is not excluded that a part of the pipe surface, in which no bores exist, could remain uncovered.

When the water permeable sleeve is a metal spiral or spring, a metal wire may be wound about the pipe where desired, or may be firstly made into a spural or spring by conventional methods and then slipped over the pipe where required by the presence of holes.

Another aspect of the method of the invention is the provision of protection to already laid drip pipelines, by applying, to each of a number of pipe sections, rectangular pieces of fabric as described hereinbefore, juxtaposing their longitudinal edges, and connecting said edges in any convenient way, or by winding a metal wire about the pipes or slipping metal spirals or spring over them, whenever possible.

The fabric sleeves for protecting drip irrigation pipes, the use of a fabric for making sleeves for protecting such pipes, and the use of metal spirals or springs for protecting drip irrigation pipes, are also aspects of the invention.

### Brief Description of the Drawings

In the drawings:
- Fig. 1 shows in perspective view a portion of pipe on which a piece of fabric is partially and loosely wound;
- Fig. 2 is a perspective, end view of a pipe covered by a sleeve formed by two longitudinal, rectangular fabric pieces, interconnected by stitching;
- Fig. 3 is a perspective view showing several pipes covered by sleeves in a manner similar to that shown in Fig. 2;
- Fig. 4 is a perspective side view showing a pipe partly covered by fabric as in Fig. 2;
- Fig. 5 is a schematic cross-section of a pipe such as that of Fig. 2;
- Fig. 6 shows in perspective view two portions of pipe to each of which a spiral sleeve or spring has been applied;
- Fig. 7 is a vertical elevational view of a section of pipe to which a spiral sleeve or spring has been applied, the pipe being cut at the end of the spirals;
- Fig. 8 is a perspective view of a section of pipe having bores therein and a spiral sleeve that leaves one bore visible, the pipe not being in the position in which it is operative, but being slanted so to show the said one bore;
- Fig. 9 is a schematic axial cross-section of an embodiment of spiral sleeve; and
- Fig. 10 is a schematic cross-section of a pipe to which a metal spiral sleeve has been applied

### Detailed Description of Preferred Embodiments

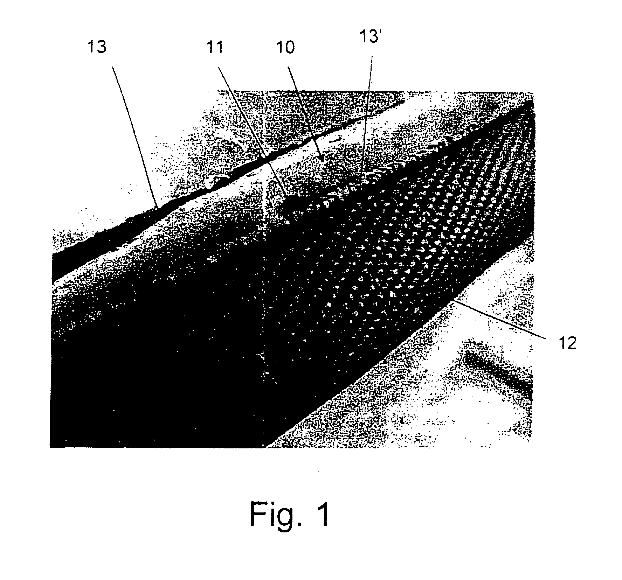

With reference to Fig. 1, numeral 10 designates a segment of a pipe for drip irrigation which comprises a bore 11. It should be understood that, when reference is made herein to "pipes for drip irrigation", this is meant to include pipes that deliver aqueous solutions for any purposes, viz. any pipes having bores therein through which water or an aqueous solution is delivered to the soil or to vegetation. A fabric 12 is partly wound about the pipe with its edges 13, 13' being separated because the fabric has been wound only loosely.

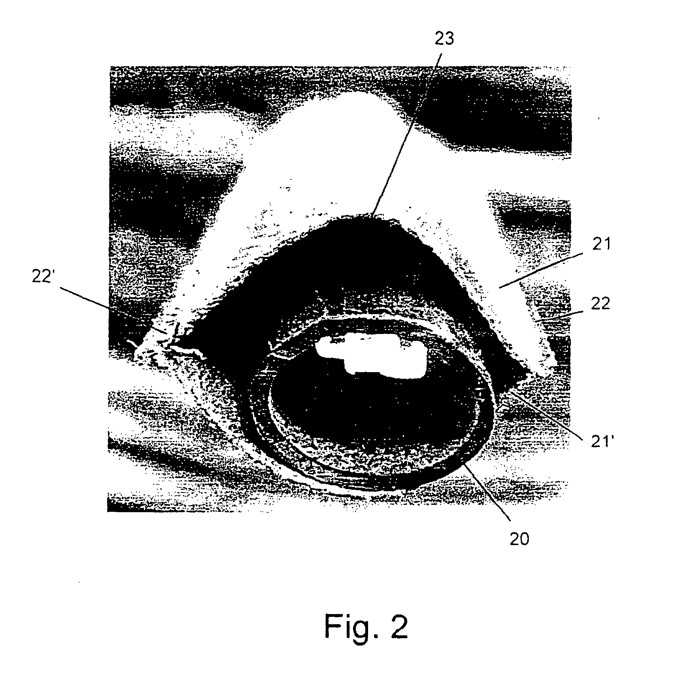

Fig. 2 shows a pipe around which is loosely placed a fabric sleeve which has been cut longitudinally into pieces 12 and 15, forming two edges 16 and 17, separated to show a bore.

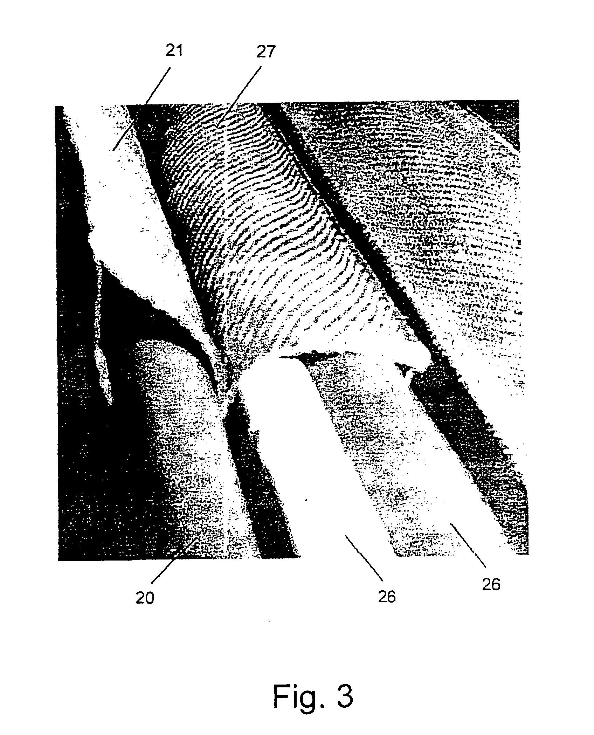

In Fig. 3 a segment of pipe such as that of Fig. 2, the fabric being generally indicated at 20, side by side with another segment covered by a fabric sleeve 22 constituted of two pieces sewn together at 21 and 23.

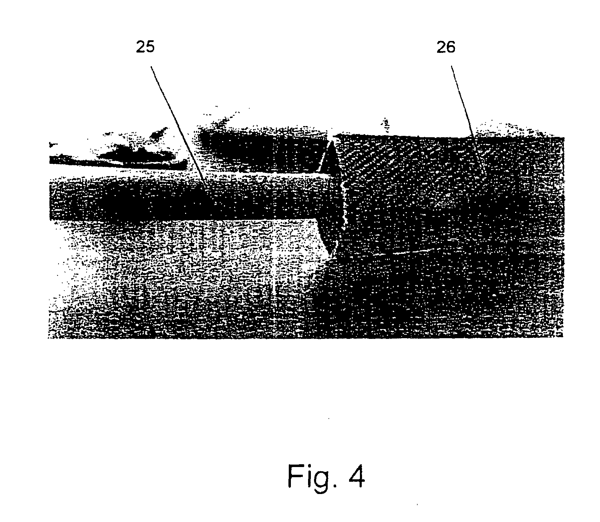

Fig. 4 shows a pipe 25 partly covered by a sleeve 26 in the same way shown in Fig. 2, but said sleeve has an inner diameter much larger than the outer diameter of the pipe, leaving a considerable space between pipe and fabric sleeve.

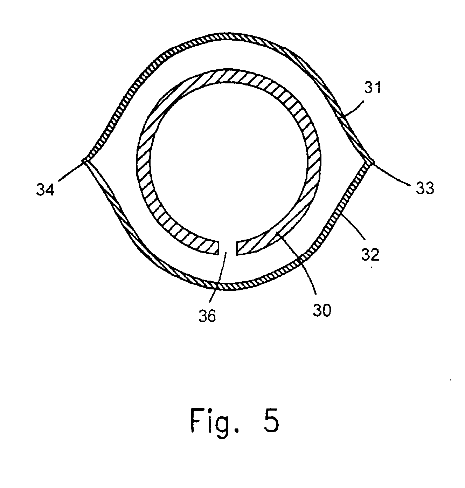

Fig. 5 schematically shows a cross-section of a pipe 30 loosely covered by a sleeve consisting of rectangular pieces 31 and 32 connected at 33 and 34 in any convenient way. A bore 36 is shown at the bottom of the pipe. The sleeve is shown as coaxial with pipe 30, leaving a gap from the pipe to facilitate the complete discharge through sleeve of the water issuing from bores such as 36, but in practice the sleeve may dispose itself in any non-coaxial and non-symmetrical position as dictated by the way in which the pipe is laid. If the pipe rests on the ground, its lower surface will contact the piece 31. If is spaced from the ground, the piece 32 will rest on the upper surface of pipe 30. The sleeve can also be positioned vertically, viz. with the connections 33 and 34 located one below and the other above the pipe, or at any angle to the vertical. These considerations as to the relative position of pipe and sleeve equally apply if the sleeve is not made of fabric, but consists of a metal wire or spring.

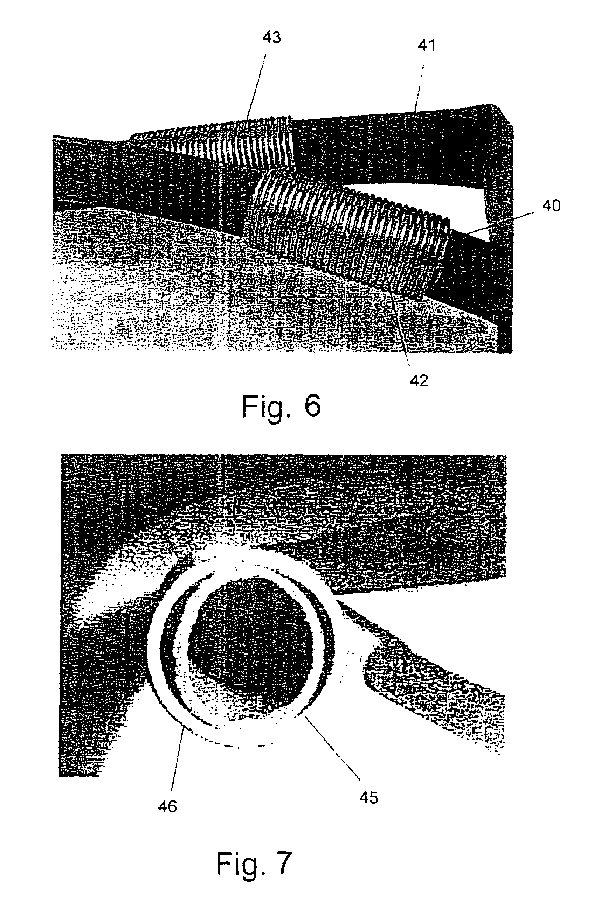

In Fig. 6, numerals 40 and 41 designate two segments of pipe for drip irrigation. Metal spiral sleeves 42 and 43 respectively are placed over said segments of pipe to cover the drip bores which are not visible.

Fig. 7 shows a similar pipe 45 in vertical elevational view. A spiral sleeve 46 is placed over said pipe 45.

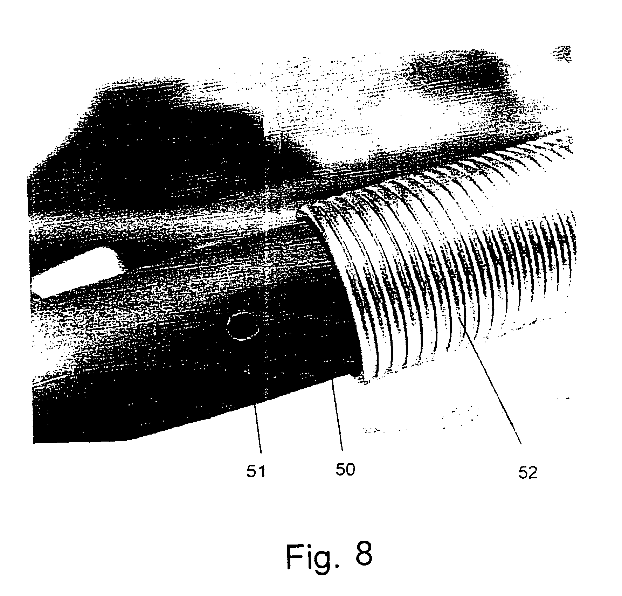

In Fig. 8, a pipe 50 has bores 51 one of which is visible in the figure. A spiral sleeve 52 is placed over the pipe, leaving said visible bore uncovered for illustration purpose only, as in regular operation said sleeve 52 or another like sleeve will cover said bore. The pipe is seen at such an angle that the said bore 51 is visible, while in the operative position of the pipe it would be at the bottom of said pipe, viz. the pipe is rotated about its axis to an angle of 90° from it operative position. In other words, the pipe cross-section that contains the centers of the bores is vertical in the operative position of the pipe, but in Fig. 8 it is horizontal.

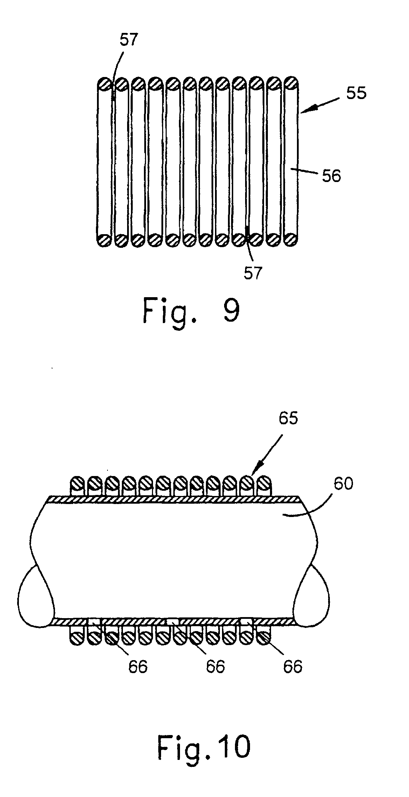

Fig. 9 schematically shows a longitudinal cross-section of metal spiral sleeve or spring, generally indicated at 55 and formed by a metal wire 56. 57 indicates the spacing between adjacent spiral turns.

Fig. 10 schematically shows a longitudinal cross-section of a pipe 60, over which is placed a metal spiral sleeve 65. Pipe 60 is provided with bores, three of which are shown at 66. The inner diameter of the sleeve is slightly larger than the outer diameter of the pipe.

Examples of drip pipelines that can be improved by this invention comprise pipelines having sections of length up to 4000 meters, inner diameter from 4 to 25 cm, wall thickness from 100 to 1200 microns, and made from a metal or a plastic matter such as polypropylene. Bores are formed in the pipeline, e.g. by drilling or otherwise, in the number of from 1 to 10 per meter of length. A fabric is applied to said pipeline, said fabric being made of polyester having a very high permeability. Examples of convenient fabrics are offered by compact fabrics, textiles, geotextiles, tarpaulin, polypropylene, but other fabrics may be found convenient. In any case, the fabric must not excessively decrease the amount of water that is dripped by the pipeline, preferably must not decrease it by more than 20% by weight. The fabric may be dyed or coated, as long as this does not excessively decrease the amount of water that filters through it. A particular example is a fabric of 100% textured polyester fibers, wherein the warp yarns have a count of 300 dtex and the weft yarns have a count of 450 dtex, said fabric having a number of yarns per centimeter of 30 in the warp and 15 in the weft, a thickness of about 5 mm and a breaking strength of about 45 KGF.

In a particular example, a drip irrigation pipe having a length of 10 meters and bores distant 20 cm from one another, viz. 50 bores in all, was fed water at 1 atm. and the bores delivered 2 lt/hr. A fabric sleeve, as hereinbefore described, was applied to it, and was quite sufficient to prevent the entrance of roots or other undesired material thorough the pipe bores. The pressure within the sleeve, viz. in the gap between it and the pipe, was 0.2 atm. The same amount of water was dripped in the absence of the fabric, viz. 2 lt/hr, filtered through the fabric, which had therefore 100 wt% permeability. It was clear that larger amounts of water could also filter through the fabric sleeve, if delivered by the drip pipe.

Alternatively, the same pipe line may be protected by a spiral sleeve made, for example, of a stainless steel 316 having a diameter of 1.2 mm. The sleeve has a spacing between adjacent spiral turns of 1 mm. Its permeability, measured as hereinbefore described, is between 80 and 100 wt%.

While embodiments of the invention have been described by way of illustration, it will be apparent that the invention may be carried out with many modifications, variations and adaptations, without departing from its spirit or exceeding the scope of the claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Improved drip pipelines, comprising a pipe having bores created therein for dispensing water to the soil, and a layer pervious to water applied to said pipe to screen the said bores.

2. Pipelines according to claim 1, wherein the layer pervious to water is a fabric sleeve.

3. Pipelines according to claim 1, wherein the layer pervious to water is a metal spiral sleeve.

4. Pipelines according to claim 2, wherein the pervious layer screens at least the surface of the segments of the pipeline wherein a bore or bores have been drilled.

5. Pipelines according to claim 3, wherein the sleeve is made of a metal wire resistant to the environment, wound in spiral form.

6. Pipelines according to claim 2, wherein the fabric is textured polypropylene.

7. Pipelines according to claim 2, wherein the fabric has a permeability to water of at least 0.80.

8. Pipelines according to claim 2, wherein the fabric sleeve consists of rectangular pieces having their long edges juxtaposed and joined.

9. Pipelines according to claim 3, wherein the sleeve has a permeability to water of at least 80 wt%

10. Pipelines according to claim 3, wherein the sleeve consists of a stainless steel wire, having a diameter from 1 to 1.5 mm.

11. Pipelines according to claim 2 0r 3, comprising pipes having sections of length up to 500 meters, inner diameter from 4 to 25 cm, wall thickness from 100 to 1200 microns, bores drilled therein in the number of from 1 to 10 per meter of length.

12. Pipelines according to claim 1 or 2, wherein the sleeve has an inner diameter larger than the outer diameter of the pipe, whereby to leave a gap between sleeve and pipe.

13. Method of protection of already laid drip pipelines, which comprises juxtaposing to each of a number of pipe sections a layer pervious to water.

14. Method of making an improved drip pipeline, which comprises providing pipe sections having drilled holes, and applying to said pipe sections a layer pervious to water.

15. Method according to claim 8, wherein the sleeve of fabric is produced by juxtaposing to each pipe section a rectangular piece of fabric, folding said piece of fabric over said pipe section so as to juxtapose its longitudinal edges and connecting said edges.

16. Use of water-pervious and root-impervious sleeves, chosen from the group consisting of fabric sleeves and metal spirals or springs, for the protection of drip irrigation pipelines.
